Europäisches Patentamt

European Patent Office

Office européen des brevets

(19)

(11) Veröffentlichungsnummer : **0 041 150**
**B1**

(12) **EUROPÄISCHE PATENTSCHRIFT**

(45) Veröffentlichungstag der Patentschrift :
02.05.84

(21) Anmeldenummer : 81103558.3

(22) Anmeldetag : 09.05.81

(51) Int. Cl.³ : **A 22 C 13/02**

(54) **Vorrichtung zum axialen Raffen von Schlauchhüllen, insbesondere für die Wurstherstellung.**

(30) Priorität : **31.05.80 DE 3020734**

(43) Veröffentlichungstag der Anmeldung :
**09.12.81 Patentblatt 81/49**

(45) Bekanntmachung des Hinweises auf die Patenterteilung : **02.05.84 Patentblatt 84/18**

(84) Benannte Vertragsstaaten :
**AT BE CH FR GB IT LI NL SE**

(56) Entgegenhaltungen :
**EP-A- 0 082 785**
**FR-A- 2 259 016**
**US-A- 2 819 488**

(73) Patentinhaber : **Kollross, Günter**
**Am Wallerstädter Weg 20**
**D-6080 Gross Gerau-Dornheim (DE)**

(72) Erfinder : **Kollross, Günter**
**Am Wallerstädter Weg 20**
**D-6080 Gross Gerau-Dornheim (DE)**

(74) Vertreter : **Beyer, Werner, Dipl.-Ing.**
**Staufenstrasse 36, II P.O. Box 174109**
**D-6000 Frankfurt/Main (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Vorrichtung zum axialen Raffen von Schlauchhüllen, insbesondere für die Wurstherstellung

Die Erfindung betrifft eine Vorrichtung zum axialen Raffen von Schlauchhüllen, insbesondere für die Wurstherstellung auf einem fliegend gehaltenen langgestreckten Dorn mit vier sternförmig um den Dornumfang verteilten und das Schlauchmaterial gegen einen Anschlag am Dorn unter Faltenbildung vorschiebenden gezahnten Raffrädern, die an einer zur Dornachse konzentrischen Halterung gelagert und durch drei Paare von kegelzahnrädern antriebsmäßig miteinander verbunden sind, wobei die Raffräder eine solche Dicke aufweisen, daß ihre Zähne mit halbkreisförmigen Auskehlungen den Dorn im Eingriffsbereich der Zähne einander überlappend umfassen, und die Halterung ihrerseits um die Dornachse drehbar an einem Ständer gelagert ist und wobei ferner Mittel zum Antreiben der Halterung und der Raffräder vorgesehen sind.

Bei einer früher zum Patent angemeldeten Vorrichtung dieser Art (EP-A-0 028 785) sind die Raffräder auf Wellen befestigt, die in Lagerböcken an der drehbaren Halterung unmittelbar neben den Raffrädern gelagert sind und an ihren freien Enden die Kegelzahnräder zur antriebsmäßigen Verbindung untereinander tragen. Dies führt bei der bevorzugten Verwendung von vier um 90° am Dornumfang verteilten Raffrädern wegen der nicht unterschreitbaren Mindestdurchmesser der Kegelräder zu verhältnismäßig großen Raffraddurchmessern, die bei großen Kalibern (Durchmesser) des zu raffenden Schlauchmaterials einen außerordentlich großen Gesamtdurchmesser des von den Raffrädern und der Halterung gebildeten Raffkopfes ergeben. Dadurch werden nicht nur die Gesamtabmessungen der Vorrichtung in radialer Richtung unerwünscht groß, sondern auch der Antrieb und die Lagerung des Raffkopfes müssen mit Rücksicht auf das Gewicht und die träge Masse entsprechend groß dimensioniert werden.

Der Erfindung liegt deshalb die Aufgabe zugrunde, eine Vorrichtung der eingangs genannten Art zu schaffen, bei welcher auch für große Kaliber des zu verarbeitenden Schlauchmaterials Durchmesser, Gewicht und träge Masse des Raffkopfes vergleichsweise klein sind.

Erfindungsgemäß wird diese Aufgabe dadurch gelöst, daß die Raffräder mit den Kegelzahnrädern wellenlos verbunden und auf undrehbaren Achsen gelagert sind, die axial außerhalb der Kegelräder an der Halterung befestigt sind.

Durch die Erfindung wird also erreicht, daß der axiale Abstand der Kegelräder von der Längsmitte des zugehörigen Raffrades trotz der erforderlichen Breite der Raffräder verkürzt werden kann, was wiederum zur Folge hat, daß die Drehachsen der Raffräder näher zum Drehzentrum der Halterung verlagert und demzufolge die Raffräder im Durchmesser kleiner gehalten werden können. Es leuchtet ein, daß sich dadurch sowohl die Abmessungen als auch das Gewicht und das Trägheitsmoment des von den Raffrädern und ihrer Halterung gebildeten Raffkopfes im Verhältnis zu der im Hauptpatent vorgesehenen Ausführung wesentlich vermindert.

Während die Halterung stets unmittelbar von einer äußeren Antriebseinrichtung beispielsweise über einen Riementrieb angetrieben werden wird, kann der Antrieb der Raffräder, wie beispielsweise aus der DE-A-24 03 470 bekannt, in ähnlicher Weise unmittelbar von einer besonderen Antriebseinrichtung erfolgen oder aber von der Drehbewegung der Halterung abgeleitet werden, wozu im Ausführungsbeispiel gemäß EP-A-028 785 eine an dem Lagerständer angebrachte Ringverzahnung vorgesehen ist, in deren schneckenförmige Gewindegänge ein lotrecht zur Drehachse der Halterung an dieser gelagertes Schneckenrad eingreift, von welchem die bei der Drehung der Halterung entstehende Drehbewegung über einen Zahnriementrieb auf die Welle eines Raffrades übertragen wird. Die hiermit verbundene verhältnismäßig große Unwucht der die Raffräder antreibenden Getriebemittel und die Gefahr, daß der Zahnriemen infolge Ermündung bricht, vermeidet eine vorteilhafte Ausgestaltung der vorliegenden Zusatzerfindung dadurch, daß die Ringverzahnung eine gewöhnliche Stirnverzahnung ist und die an der Halterung angeordneten Getriebemittel ein weiteres Kegelzahnradpaar umfassen, dessen eines Rad mit einem Raffrad wellenlos verbunden ist und dessen anderes Rad auf einer zur Drehachse der Halterung parallelen Welle sitzt, die außerdem ein mit der Ringverzahnung kämmendes Stirnzahnrad trägt. Da auch dieses weitere Kegelzahnradpaar nur einen vergleichsweise geringen Abstand von der Drehachse der Halterung aufweist, bleibt die durch diese Getriebemittel entstehende Unwucht gering und läßt sich, ggf. durch Gegengewichte, leicht beherrschen. Die Ringverzahnung am Lagerständer hat einen entsprechend kleinen Durchmesser und ist als gewöhnliche Stirnverzahnung ebenso wie das mit ihr in Eingriff stehende Stirnrad leichter und billiger herzustellen als bei einem Schneckentrieb. Der kleinere Durchmeser der Ringverzahnung kommt außerdem dem bei der Vorrichtung des Hauptpatents angestrebten Drehzahlverhältnis zwischen den Raffrädern und der Halterung Zwischen 2 : 1 und 1 : 2 entgegen, das ggf. noch dadurch noch weiter korrigiert werden kann, daß das weitere Kegelzahnradpaar als Untersetzungsgetriebe ausgebildet ist.

Ein bevorzugtes Ausführungsbeispiel der im Zusatzpatent unter Schutz gestellten Erfindung wird nachstehend in Verbindung mit der Zeichnung näher erläutert. Es zeigen :

Figur 1 eine Stirnansicht der Vorrichtung, teilweise im Schnitt zur Veranschaulichung der Lagerung eines Raffrades und

Figur 2 einen Längsschnitt durch die Vorrichtung nach Linie II-II in Fig. 1.

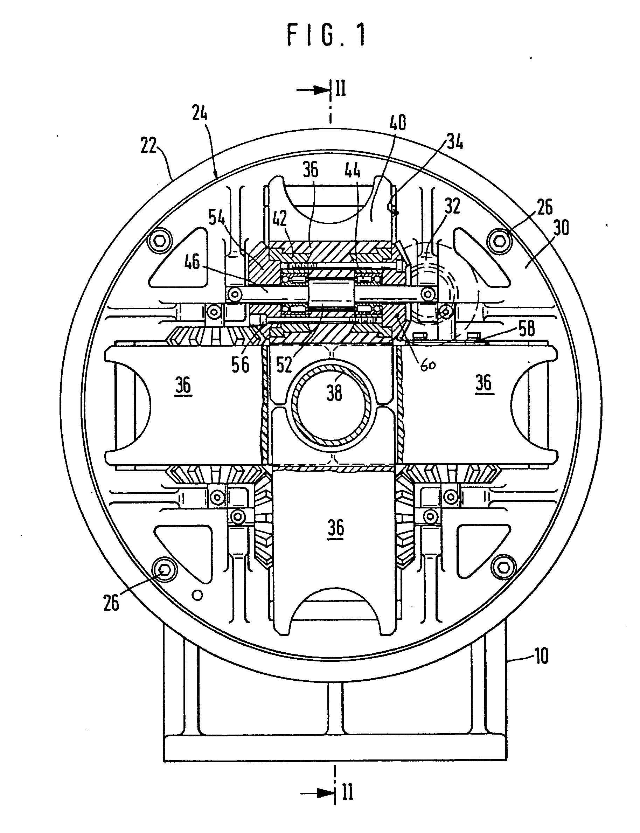

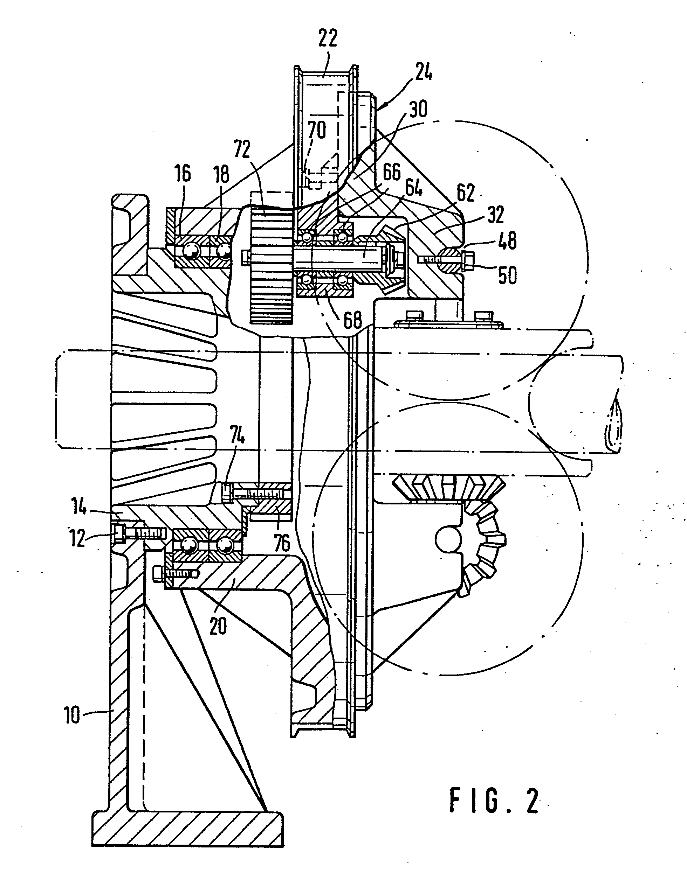

Wie in den Figuren 1 und 2 dargestellt, ist an einem Lagerständer 10 mittels Schrauben 12 eine Lagerhülse 14 befestigt, an welcher mittels Kugellagern 16, 18 eine hülsenförmige Welle 20 drehbar gelagert ist. Die hülsenförmige Welle 20 trägt einstückig eine Riemenscheibe 22, an welcher eine ringförmige Halterung 24, beispielsweise mit Schrauben 26, befestigt ist.

Die Halterung 24 besteht aus einem plattenförmigen Teil 30 mit daran einstückig ansetzenden lagerbockartigen Vorsprüngen 32, zwischen denen in kreuzförmiger Anordnung Aussparungen 34 zur Aufnahme von vier Rafffrädern 36 vorgesehen sind, welche sternförmig um einen sich in bekannter Weise koaxial durch die vorbeschriebene Vorrichtung erstreckenden rohrförmigen Raffdorn 38 angeordnet sind.

Die Raffräder 36 bestehen aus künstlichem Gummi oder einem anderen Kunststoff und sind, aus Fig. 2 ersichtlich ist, an ihrem Umfang mit halbkreisförmig ausgekehlten Zähnen 40 versehen, die an den vier Raffrädern derart zueinander versetzt sind, daß sie im Eingriffsbereich um den Raffdorn 38 aufeinanderfolgend überlappen.

Die Raffräder 36 sind mit mehrfach abgesetzten Durchgangsbohrungen versehen, in welche Lagerhülsen 42 eingesetzt sind. Die Lagerhülsen 42 nehmen kombinierte Nadel-/Kugellager 44 auf, mit denen die Raffräder 36 auf Achsen 46 gelagert sind, deren Enden in Maulöffnungen 48 der Vorsprünge 32 eingreifen und darin durch Schrauben 50 befestigt sind. Die Achsen 46 sind ferner in der Längsmitte bei 52 zur Bildung von Anschlägen für die Innenringe der Lager 44 zylindrisch verdickt. Die Lagerhülsen 42 sind auf den voneinander wegweisenden Seiten mit Ausdrehungen versehen, in welche die zylindrischen Ansätze von Kegelrädern 54 eingreifen, die mittels jeweils dreier am Umfang verteilter Schrauben 56 an den jeweils gegenüberliegenden Lagerhülsen 52 verspannt sind.

Die Kegelwinkel der Kegelräder 54 betragen 45°. Insgesamt sind sechs solche Kegelräder 54 vorhanden, die drei Kegelradpaare zur antriebsmäßigen Verbindung der vier Raffräder 36 im Drehzahlverhältnis 1 : 1 bilden. Das mit Bezug auf Fig. 1 rechte Raffrad ist nur mit einem Kegelrad an seiner dortigen Unterseite versehen, während an seiner Oberseite eine das Kegelrad ersetzende Druckplatte 58 vorgesehen ist. In ähnlicher Weise hat auch das mit Bezug auf Fig. 1 obere Raffrad nur an seiner dortigen linken Seite ein Kegelrad 54 mit einem Kegelwinkel von 45°, während an der rechten Seite ein Kegelrad 60 mit einem Kegelwinkel von 60° befestigt ist, das zur Bildung eines Untersetzungsgetriebes mit einem Kegelrad 62 (Fig. 2) kämmt, welches einen Kegelwinkel von nur 30° aufweist. Das Kegelrad 62 sitzt am vorderen Ende einer zur Drehachse der Halterung 24 koaxialen Welle 64, die mittels Kugellagern 66 in einem Lagerteil 68 gelagert ist, das mittels Schrauben 70 in einer Ausnehmung der Riemenscheibe 22 befestigt ist. Das andere Ende der Welle 64 trägt ein Zahnritzel 72, das mit einem an der Lagerhülse 14 durch Schrauben 74 befestigen Zahnring 76 kämmt.

Die Halterung 24 wird in an sich bekannter Weise mit Hilfe der Riemenscheibe 22 von einem (nicht gezeigten) Elektromotor, der regelbar sein kann, über einen Riementrieb angetrieben. Wie aus der Zeichnung ersichtlich, ist der Teilkreisdurchmesser des Zahnrings 76 doppelt so groß wie der des Zahnritzels 72. Bei einer Umdrehung der Halterung 24 um ihre Achse führt demzufolge des Zahnritzes 72 zwei Umdrehungen gegenüber der Halterung 24 aus. Wie oben erwähnt, hat das Kegelzahnrad 62 einen Kegelwinkel von 30°, während der Kegelwinkel des damit kämmenden Kegelzahnrades 60 einen Kegelwinkel von 60° aufweist. Das von diesen beiden Kegelzahnrädern gebildete Getriebe hat folglich eine Untersetzung von 1 : 2, welche die Übersetzung in der Drehung des Zahnritzels 72 gegenüber der Drehung der Halterung 24 von 2 : 1 kompensiert. Da das von dem Kegelzahnrad 60 unmittelbar angetriebene Raffrad 36 mit den übrigen Raffrädern über die Kegelzahnräder 54 im Verhältnis 1 : 1 antriebsmäßig verbunden ist, werden also sämtliche Raffräder 36 mit der gleichen Drehzahl drehen, mit welcher die Halterung 24 um ihre Achse dreht. Unter der Annahme, daß jedes Raffrad 36 mit zehn Zähnen 40 versehen ist, wird demzufolge bei einer Umdrehung der Halterung 24 eine schraubenförmig verlaufende Raffalte mit zehn Windungen erzeugt werden.

Wie ersichtlich, ermöglicht die wellenlose Ausführung der Raffräder 36 und deren Lagerung auf mit ihren Enden an der Halterung 24 befestigten undrehbaren Achsen das unmittelbare Anschließen der Kegelzahnräder 54 an die Seiten der Raffräder 36, was wiederum zum Folge hat, daß der Raffraddurchmesser verhältnismäßig klein gewählt werden kann, ohne eine Mindestgröße der Kegelräder 54 wie auch des Kegelrades 60 zu unterschreiten. Der gesamte, aus der Halterung 24, den Raffrädern 36 und den diese lagernden und verbindenden Elementen bestehende Raffkopf kann daher entsprechend klein im Durchmesser ausgeführt werden, und es wird auch nur ein entsprechend großer Durchmesser für die Riemenscheibe 22 benötigt. Dadurch können auch das Gewicht und das Trägheitsmoment des Raffkopfes klein gehalten werden, was das Beschleunigen und Abbremsen zu Beginn bzw. am Ende eines jeden Raffvorgangs erleichtert bzw. die Verwendung eines kleineren Antriebsmotors gegenüber der bisher vorgeschlagenen Ausführung ermöglicht.

## Ansprüche

1. Vorrichtung zum axialen Raffen von Schlauchhüllen, insbesondere für die Wurstherstellung, auf einem fliegend gehaltenen langgestreckten Dorn (38) mit vier sternförmig um den Dornumfang verteilten und das Schlauchmaterial gegen einen Anschlag am Dorn unter Faltenbildung vorschiebenden gezahnten Raffräder (36), die an einer zur Dornachse konzentrischen Halterung (24) gelagert und durch drei Paare von Kegelzahnrädern (54) antriebsmäßig miteinander verbunden sind, wobei die Raffräder (36) eine solche Dicke aufweisen, daß ihre Zähne (40) mit halbkreisförmigen Auskehlungen den Dorn im Eingriffsbereich der Zähne einander überlappend umfassen, und die Halterung (24) ihrerseits um die Dornachse drehbar an einem Ständer (10) gelagert ist und wobei ferner Mittel zum Antreiben der Halterung und der Raffräder vorgesehen sind, dadurch gekennzeichnet, daß die Raffräder (36) mit den Kegelzahnrädern (54) wellenlos verbunden und auf undrehbaren Achsen (46) gelagert sind, die axial außerhalb der Kegelräder (54) an der Halterung (24) befestigt sind.

2. Vorrichtung nach Anspruch 1, wobei für die Mittel zum Antreiben der Raffräder (36) eine an dem Ständer (10) angebrachte Ringverzahnung (76) vorgesehen ist, dadurch gekennzeichnet, daß die Ringverzahnung (76) eine gewöhnliche Stirnverzahnung ist und die an der Halterung (24) angeordneten Getriebemittel ein weiteres Kegelzahnradpaar (60, 62) umfassen, dessen eines Rad (60) mit einem Raffrad (36) wellenlos verbunden ist und dessen anderes Rad (62) auf einer zur Drehachse der Halterung (24) parrallelen Welle (64) sitzt, die außerdem ein mit der Ringverzahnung (76) kämmendes Stirnzahnrad (72) trägt.

3. Vorrichtung nach Anspruch 2, dadurch gekennzeichnet, daß das weiter Kegelzahnradpaar (60, 62) als Untersetzungsgetriebe ausgebildet ist.

## Claims

1. Apparatus for axially shirring tubular casings, especially for sausage making, on an elongate mandrel (38) supported overhung and having four toothed shirring wheels (36) spaced radially around the mandrel circumference and advancing the tubular material towards an abutment on the mandrel while forming folds, which wheels are mounted on a support (24) concentric with the mandrel axis and are in driving connection with one another through three pairs of bevel gears (54) wherein the shirring wheels (36) are of such a thickness that their teeth (40), overlapping one another, enclose the mandrel in the engagement zone of the teeth with semicircular recesses, and the support (24) itself is mounted rotatably about the mandrel axis on a stand (10), and wherein, moreover, means are provided for driving the support and the shirring wheels, characterised in that the shirring wheels (36) are connected shaftlessly with the bevel gears (54) and are mounted on non-rotatable axles (46) which are secured to the support (24) axially outside the bevel gears (54).

2. Apparatus according to Claim 1, wherein a toothed ring (76) arranged on the stand (10) is provided for the means for driving the shirring wheels (36), characterised in that the toothed ring (76) is a conventional spur toothing and the gearing means disposed on the support (24) comprise a further pair of bevel gears (60, 62), one gear (60) of which is connected shaftlessly with one shirring wheel (36) and the other gear (62) of which is seated on a shaft (64) which is parallel to the axis of rotation of the support (24) and which, moreover, carries a spur gear (72) meshing with the toothed ring (76).

3. Apparatus according to Claim 2, characterised in that the further pair of bevel gears (60, 62) are designed 15 as a reduction gearing.

## Revendications

1. Dispositif pour retrousser axialement les boyaux tubulaires, en particulier pour la fabrication de saucisses sur un mandrin (38) allongé supporté en porte-à-faux, à l'aide de quatre galets de plissage (36) répartis en étoile autour de la périphérie du mandrin et de la matière tubulaire refoulée de façon à former des plis par glissement contre une butée, ces galets étant montés rotatifs sur un support 24 concentrique à l'axe du mandrin et reliés entre eux par l'intermédiaire de trois couples de pignons coniques (54) qui en assurent l'entraînement en rotation, ces galets (36) ayant une épaisseur telle que leurs dents (40) enveloppent à recouvrement le mandrin dans la zone d'engrènement des dents qui présentent à cet effet des gorges de forme semi-circulaire, ledit support (24) étant monté rotatif autour de l'axe du mandrin sur une console (10) à palier où d'autres moyens conçus pour entraîner le support (24) et les galets de plissage (36) sont prévus, cet appareil étant caractérisé en outre par le fait que les galets de plissage (36) sont reliés sans l'intermédiaire d'arbres quelconques aux couples de pignons coniques (54) et montés en rotation sur des axes non-rotatifs (46) qui sont fixés sur le support (24) en dehors des pignons coniques (54).

2. Dispositif selon la revendication 1, dans lequel lesdits autres moyens prévus pour entraîner les galets de plissage (36) comprennent une couronne dentée (76) fixée sur la console (10), l'appareil étant caractérisé en outre par le fait que cette couronne denté (76) consiste simplement en une roue à denture droite et que l'engrenage prévu sur le support (24) comprend un autre couple conique (60, 62) dont un pignon (60) est relié sans arbre intermédiaire à un des galets de plissage (36) et dont l'autre pignon (62) est monté sur un arbre (64) parallèle à l'axe de rotation du support (24), ce dernier portant en outre un pignon à denture droite (72) qui engrène avec ladite couronne (76).

3. Dispositif selon la revendication 2, caractérisé par le fait que ledit couple conique supplémentaire (60, 62) est réalisé sous forme d'engrenage démultiplicateur.

# FIG. 1

FIG. 2